# EUROPEAN PATENT SPECIFICATION

(11) **EP 1 784 783 B1**
(45) Date of publication and mention of the grant of the patent: **12.03.2008**
(21) Application number: 04774696.1
(22) Date of filing: 23.09.2004
(51) Int. Cl.: G06T 1/60

(54) **METHOD OF ADDRESS-CONTROLLING MEMORY WITH SINGLE BUFFER STRUCTURE**
VERFAHREN UND ADRESSENSTEUERUNG EINES SPEICHERS MIT EINZELPUFFERSTRUKTUR
PROCEDE DE CONTROLE EN ADRESSE DE MEMOIRE A STRUCTURE DE TAMPON UNIQUE

(30) Priority: 31.08.2004 KR 20040068928
(43) Date of publication of application: 16.05.2007
(73) Proprietor: Letsvision Co., Ltd., Gyeonggi-do 461-060 (KR)
(72) Inventor: CHO, Hong-Kyu, Seongnam-city,Kyungki-do 463-820 (KR); KAHNG, Sung-Hyun, Anyang-city,Kyungki-do 431-817 (KR)
(74) Representative: Grosse, Wolfgang
(86) International application number: PCT/KR2004/002443
(87) International publication number: WO 2006/025625

(56) References cited:
- JP-A- 8 018 791
- JP-A- 2005 027 003
- US-A1- 2001 048 628

## Description

### Technical Field

The present invention relates to a method of address-controlling a memory with a single buffer structure, and in particular,to a method of address-controlling a memory which effectively address-controls the image data based on blocks using a single buffer structure during the process of writing the image data at the memory, and reading the image data written at the memory by an image processor.

### Background Art

The image data input from the input terminal connected to a camera is, for instance, written at the buffer memory in asequential manner to be processed by an image processor.

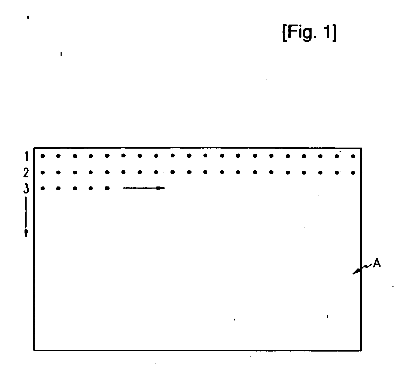

As shown in Fig. 1, the image data input from the camera are first horizontally written at the first line of the buffer memory,and when the storage of the first line having a predetermined length of a frameor a frame multiple is completed, the image data are then written at the second line.

This means that when the image data input from the camera are written, the storage is first made at the buffer memory in the horizontal direction, and then, proceeds in the vertical direction.

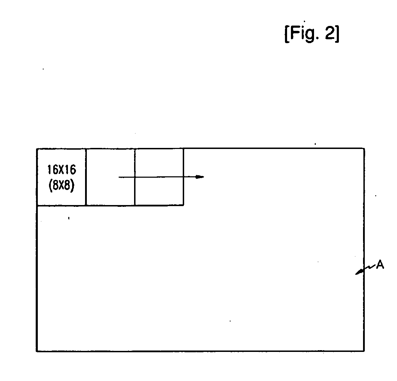

In order to process the image data written at the buffer memory with joint photographic experts group standards (JPEG) or moving picture experts group standards (MPEG), as shown in Fig. 2, the processing is made by a block (macro block) unit with 16 x 16 or 8 x 8-numbered image data.

That is, the luminance component Y of the image datais processed by a block unit of 16 x 16, and the chrominance components Cb and Cr are processed by a block unit of 8 x 8. For convenience, the block unit of 16 x 16 for the luminance component Y will be now explained.

The image processing is possibly made only when one or more block data are obtained, that is, only when the data for 16 lines are input in the vertical direction.

Furthermore, even when the image processor processes the data written (collected) at the memory by a predetermined amount, the image data are continuously input from the camera, and hence, it is required to provide a memory space for writing those input data.

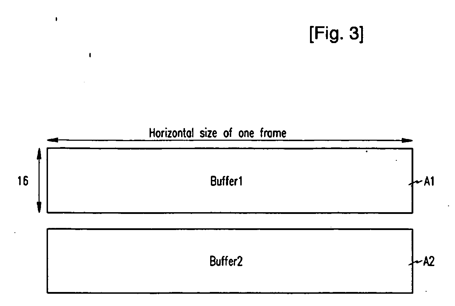

For this purpose, as shown in Fig. 3, two memories are used as a double buffer structure to process the image data.

The memory size solely depends upon how speedy the image processor processes the written block unit data, compared to the input speed of the data from the camera. As the speed of the image processor is slower, the required memory size becomes enlarged.

Even if the image processor processes the image data with the same speed as the input speed of the data from the camera, as shown in Fig. 3, two memories A1 and A2 each having the multiplication of the horizontal size of one frame with 16 lines should be used in accordance with the current double buffer concept. That is, a memory with (the horizontal size of one frame) x 16 x 2 should be used.

As described above, in order to process the image data input from the camera with the conventional image processing unit, adouble buffer-structured memory is necessarily introduced. Depending upon the capacity of the image processor, the usage of two memories A1 and A2 each having the multiplication of the horizontal size of one frame with 16 line selevates the production cost of the image processor, such as a digital camera, a portable phone with a camera, and a camcorder.

US2001/048628 A1 discloses a method for raster-to-block conversion of image data on the basis of a line buffer. The rate of incoming data is reduced before conversion, and line-wise data is written into the buffer in a way that sequential reading from the buffer yields the image data block by block.

### Disclosure of Invention

### Technical Solution

It is an object of the present invention to provide a method of address-controlling a memory with a single buffer structure which writes the image data input from the camera without using a memory having the currently available double buffer structure, and effectively controls the addresses while reading the image data written at the memory by an image processor, thereby realizing the same leveled capacity as in the double buffer structure only with a memory size being half the double buffer memory size.

This and other objects may be achieved by a method of address-controlling a memory with the following features.

With the memory address controlling method, when the image data processing per a block unit is activated, the memory is divided into vertical lines and horizontal sectors. The image data input from the camera are address-controlled by executing a first mode such that the data are sequentially written at the memory in the horizontal direction, and the image data are written at the first to the fifteenth vertical lines. When the storage of the image data at the first to the fifteenth lines is completed, the written image data are address-controlled such that an image processor reads the written image data per a macro block unit, and the image data input from the camera are sequentially written at the sixteenth line in the horizontal direction. When the image processor reads all the image data written at the first sector per the macro block unit, the reading of the image data is kept to be in the first mode, and the storage of the image data input from the camera enters a second mode to thereby write the image data input from the camera at the first sector. When all the image data written at the sixteenth sector are read in the first mode, the reading of the written image data is shifted into the second mode to sequentially read the image data written in the first lines of the sectors per the respective macro blocks, and the image data input from the camera are sequentially written at the sixteenth sector in the second mode. When the reading of the image data written at the first lines of the sectors and the storage of the image data input from the camera up to the sixteenth line of the sixteenth sector in the second mode are completed, the reading of the image data written per the respective macro blocks at the second lines of the sectors is kept to be in the second mode, and the storage of the image data input from the camera is shifted into the first mode to write the data at the first lines in the horizontal direction. When the data reading up to the sixteenth line through the data reading of the second mode and the data storage of the first mode is completed, the data reading of the first mode is maintained, and the image data input from the camera are written in the first mode.

### Brief Description of the Drawings

The above and other advantages of the present invention will become more apparent by describing preferred embodiments thereof in detail with reference to the accompanying drawings in which:

Fig. 1 illustrates the sequence of writing the image data input from a camera at a memory according to a prior art;

Fig. 2 illustrates a macro block unit for processing the image data written at the memory shown in Fig. 1 as the image of JPEG or MPEG;

Fig. 3 illustrates a double buffer structure and a minimum memory size for processing the image data input from a camera with a memory address controller according to a prior art;

Fig. 4 illustrates the storage of the image data input from a camera in a second mode with a memory address controller having a single buffer structure according to an embodiment of the present invention;

Fig. 5 illustrates the process of reading the image data written in the second mode shown in Fig. 4 by an image processor;

Fig. 6 illustrates the process of writing the image data input from a camera at a memory in a first mode with a memory address controller having a single buffer structure according to an embodiment of the present invention, and reading the written image data by an image processor;

Fig. 7 illustrates the process of writing the image data input from a camera at a memory in a second mode with a memory address controller having a single buffer structure according to an embodiment of the present invention, and reading the written image data by an image processor; and

Fig. 8 illustrates the process of writing the image data input from a camera at a memory in a first mode with a memory address controller having a single buffer structure according to an embodiment of the present invention, and reading the written image data in a second mode by an image processor.

### Best Mode for Carrying Out the Invention

The present invention will be described more fully hereinafter with reference to the accompanying drawings, in which preferred embodiments of the invention are shown.

A method of address-controlling a memory with a single buffer structure involves two modes, which are shifted directly after the data filling the memory region with the multiplication of the horizontal size of one frame (referred to hereinafter as a frame width) with sixteen vertical lines are written or read.

As a prerequisite of application of the present method, the horizontal size of the image should be a multiple of 256, based on the luminance Y.

The first mode indicates the application of the address controlling with the usage of a double buffer structure. As shown in Fig. 1, when the image data input from the camera are written at a memory, the storage is made at a first line while proceeding in the horizontal direction of the frame, and when completed, the storage is again made at a second line horizontally, followed by the writing at the third to sixteenth lines. That is, the storage is all made by the frame width x 16 lines.

With the first mode, the image processor reads and processes the written image data by the block unit of 16 x 16.

As described above, when the image data reading and processing of the first mode are made, the address controlling of the second mode is executed.

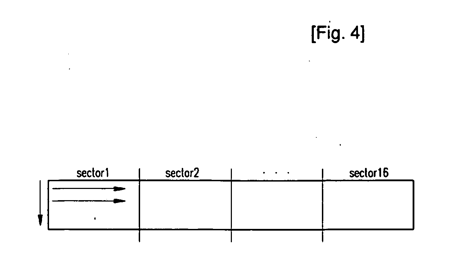

With the address controlling of the second mode, when the image data from the camera are written at the memory, as shown in Fig.4, the frame width is horizontally divided into sixteen sectors being the memory regions, and the image data input from the camera are written in the first mode such that they are written at the first sector, and when completed, at the second sector. The storage is sequentially made at the third to sixteenth sectors in the same manner.

The respective sectors are structured with a minimum size so large as to receive one-lined image data corresponding to the frame width in the horizontal direction of the frame, and the horizontal size thereof should be the multiple of 16.

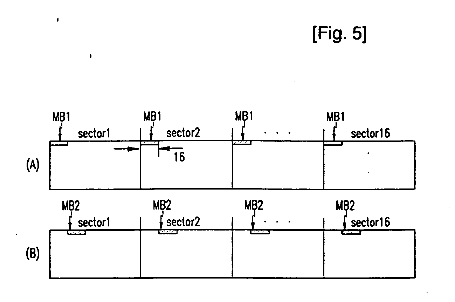

As shown in Fig. 4, when the memory is divided into sixteen sectors such that the horizontal size thereof should be the multiple of 16, and the image data input from the camera are sequentially written at the first to the sixteenth sectors, as shown in Fig. 5, the image processor reads the image data written at the respective sectors by the designated amount with the second mode.

Fig. 5A illustrates the process of reading the image data of the first macro block MB1 at the first to sixteenth sectors, and Fig. 5B illustrates the process of reading the image data of the second macro block MB2 at the respective sectors. With the respective sectors, the macro block MB1 corresponding to the first line is completely read, and the macro block MB2 corresponding to the second line is then read, thereby reading all the data.

In this case, the amount of data read at the respective sectors may be slightly differentiated depending upon the way of processing of the image processor.

In the case of the luminance component, eight image data are read when it is intended to make the data processing per the block, and sixteen image data are read when it is intended to make the data processing per the macro block. In the case of the chrominance components (Cb and Cr), eight image data are read.

It will be assumed that sixteen image data are readat each sector in the case of the luminance component Y.

The storage of the image data input from the camera by address-controlling the memory having a single buffer structure with two modes, and the reading of the image processor for processing the written data will be now explained in detail.

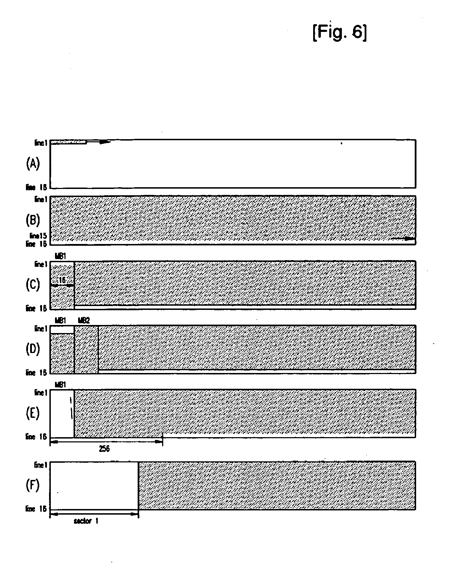

Fig. 6 illustrates the process of writing the image data input from the camera in the first mode, and reading the written image data.

First, when the address controlling of the memory in the first mode is activated, as shown in Fig. 6A, the image data input from the camera are horizontally written at the first line of the memory.

When the image data for the first line are completely written, the image data for the second line are written. In this way, as shown in Fig. 6B, the image data storage is vertically made up to the fifteenth line.

As shown in Fig. 6B, when the image data storage is completed up to the fifteenth line of the memory, as shown in Fig. 6C, the address controlling is made such that the image processor reads the image data per the macro block unit MB1.

In case the image processor reads the image data per the block unit when the image data storage is completed up to the fifteenth line of the memory, and the storage of the image data is made with the same speed as the reading of the image processor, as shown in Fig. 6C, the storage of the sixteen image data at the sixteenth line is completed during the time period of reading the sixteen image data horizontally. Therefore, any error is not made at the image data processing of the image processor per the macro block unit of 16 x 16.

When the image processor reads sixteen image data secondly in the vertical direction of the first macro block MB 1 by the controlling of the memory address such that the image processor writes the image data input from the camera and reads the written image data, as the address controlling for the writing of the image data input from the camera is continuously executed at the sixteenth line, the storage of the image data shown in Fig. 6D is made.

As shown in Fig. 6E, when the image processor completely reads the macro block MB 1 by the memory address controlling, the image data input from the camera are recorded at the sixteenth line by 256 corresponding to the amount of one macro block. Among them, as the previously recorded sixteen image data belong to the first macro block MB 1, the image processor has already read them.

When the storage of the image data at the sixteenth line is completed by the memory address controlling, the image process has already read all the image data within the first sector constructed with a size of one horizontal line.

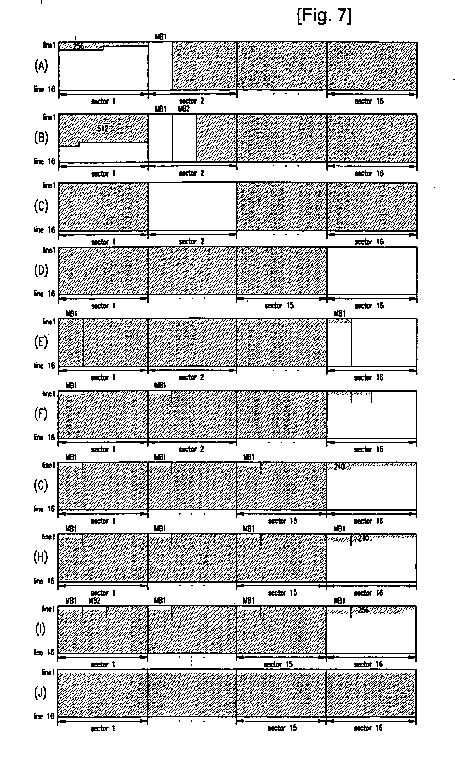

The storage of the image data input from the camera in the first mode is completed, and as shown in Fig. 7, the address is controlled to be in a second mode during the reading of the image processor.

In case the address is controlled to be in the second mode, sixteen sectors are horizontally divided at the memory.

As explained with reference to Fig. 6, when the image data in the first sector are all read, the reading of the image data of the macro block MB 1 belonging to the second sector is made. As shown in Fig. 7A, the image data input from the camera are written at the first sector constructed with a size of one horizontal line. When all the image data of the first macro block MB 1 in the second sector are all read, total 256-numbered image data corresponding to one macro block are written at the first sector.

Furthermore, when the reading of the second macro block MB2 in the second sector is completed, as shown in Fig. 7B, 256-numbered image data input from the camera are further recorded at the first sector, thereby writing total 512-numbered image data. As shown in Fig. 7C, when the reading of the image data in the second sector is completed, the storage of the image data at the first sector is completed.

As shown in Fig. 7D, when the reading of the image data written at the sixteenth sector is completed, the reading control of the second mode is executed. As shown in Fig. 7E, the reading of the sixteen image data written at the first line of the first macro block MB 1 in the first sector writing the horizontal one line-sized image data is made, and the sixteen image data input from the camera are written at the first line of the first macro block MB 1 in the sixteenth sector.

When the reading of the sixteen image data written at the first line of the first macro block MB1 in the first sector is completed, as shown in Fig. 7F, the reading of the sixteen image data written at the first line of the first macro block MB 1 in the second sector is controlled, and the sixteen image data input from the camera are written at the sixteenth sector.

When the reading of the sixteen image data written at the first line of the first macro block MB1 in the fourteenth sector is completed, as shown in Fig. 7G, the reading of the sixteen image data written at the first line of the first macro block MB1 in the fifteenth sector is controlled, and the sixteen image data input from the camera are written at the sixteenth sector.

At this time, the image data belonging to the first macro block MB1 are read by the amount of the image data written at the fifteenth line 16 x 15, and the image data input from the camera are recorded at the sixteenth sector by 240 (16 x 15).

Thereafter, when the reading of the sixteen image data written at the first line of the first macro block MB 1 in the fifteenth sector is completed, as shown in Fig. 7H, the reading of the sixteen image data written at the first line of the first macro block MB 1 in the sixteenth sector is controlled.

At this time, although the image data input from the camera are recorded at the sixteenth sector by 256, as the initially recorded sixteen data belong to the first macro block MB 1 and the image processor has already read them, 240-numbered non-read data are left at the sixteenth sector.

When the reading of the image data written at the first line of the first macro block MB1 at the sixteen sectors is controlled, as shown in Fig. 7I, the reading of the image data written at the first line of the second macro block MB2 in the first sector is controlled, and the image data input from the camera are further written by the amount of the sixteen data read at the sixteenth sector, thereby writing 256-numbered image data.

When the reading of the image data written at the first line of the second macro block MB2 in the second sector is completed, the reading of the image data written at the first line of the second macro block MB2 in the third sector, and the storage thereof at the sixteenth sector are controlled. As shown in Fig. 7J, when the controlling is sequentially made so that the image processor reads all the image data written at the first lines of all the sixteen sectors, the sixteenth sector is filled with the image data input from the camera, and the image processor has already read the image data written at the first line of the sixteenth sector.

When the image data written at the first lines of all the sixteen sectors are read by the image processor, the storage of the image data input from the camera is controlled to be in the first mode, and the reading of the image data written at the sixteen sectors by the image processor is controlled to be in the second mode.

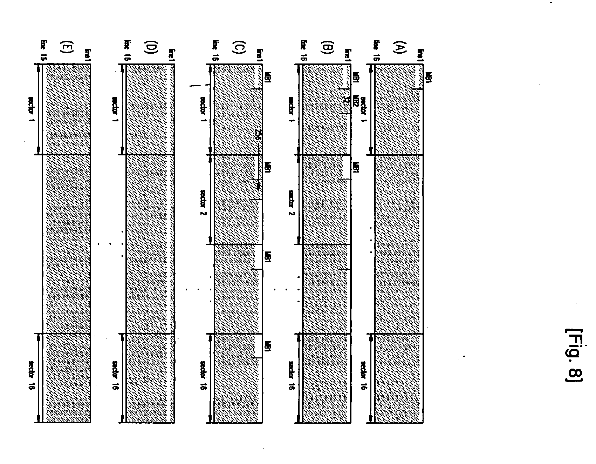

Accordingly, as shown in Fig. 8A, the image processor reads the sixteen image data written at the second line of the first macro block MB 1 in the first sector, and simultaneously, writes the sixteen image data input from the camera at the first line in the first mode.

Thereafter, when the reading of the sixteen image data written at the second line of the first macro block MB 1 in the first sector is completed, as shown in Fig. 8B, the reading of the sixteen image data written at the second line of the first macro block MB 1 in the second sector is controlled, and writes the sixteen image data input from the camera while connecting them with the first line in the first sector.

When the reading of the sixteen image data written at the second line of the first macro block MB 1 in the sixteenth sector is controlled, as shown in Fig. 8C, the image data input from the camera and controlled to be in the first mode are written at the first line by 256.

Furthermore, when the reading of the second lines at the respective sectors are completed by performing the sequential address controlling for the writing of the image data input from the camera in the first mode and the reading of the image data written at the sixteen sectors in the second mode, as shown in Fig. 8D, the image data input from the camera are all written at the first line.

When the image processor reads all the image data written at the last sixteenth line by repeatedly writing the image data input from the camera and reading the image data written at the respective sixteen sectors in the second mode, as shown in Fig. 8E, the image data input from the camera and written in the first mode fill all the first to the fifteenth lines.

The processing state illustrated Fig. 8E is identical with that illustrated in Fig. 6B.

Accordingly, the image data input from the image processor and the camera are processed through the step illustrated in Fig. 6C, and those other steps following it.

With the process of writing the image data input from the camera and reading the written image data by the image processor, in order to escape the case where the image processor does not read the written image data (not read, but the re-writing of the image data is made) or reads the sector with no storage of the image data, it is controlled that when the image data are recorded at the memory, the image processor does not make the data reading after all the data of the frame width x 16 are recorded, but initiates the data reading after the data recording of the frame width x 15 is made.

Such a case is made with the first mode when the last one line being the sixteenth line is left over, and with the second mode when the last one sector being the sixteenth sector is left over.

With the hardware taking the inventive structure, when the user decides the target maximum functional value (for instance, the maximum resolution) so that the frame width of the memory is fixed in the hardware structure thereof, and the image having a horizontal size being half the frame width is input, the memory is used in the above-described way, or the currently available double buffer structure may be used.

That is, two memory regions each with the multiplication of the horizontal size of the input image data with 16 are designated, and controlled by way of the double buffer address controlling.

With the inventive method of address-controlling a memory with a single buffer structure, the desired operation is made using a memory only with a size being half that of the memory with the double buffer structure, thereby achieving the efficient usage of the memory required for processing the image data.

Although preferred embodiments of the present invention have been described in detail hereinabove, it should be clearly understood that many variations and/or modifications are possible within the scope of the present invention, as defined in the appended claims.

## Claims

1. A method of address-controlling a memory with a single buffer structure, the method comprising the steps of:
dividing the memory into vertical lines and horizontal sectors when the image data processing per a block unit is activated;
address-controlling the image data input from the camera by executing a first mode such that the data are sequentially written at the memory in the horizontal direction, and writing the image data at the first to the fifteenth vertical lines; when the storage of the image data at the first to the fifteenth lines is completed, address-controlling the written image data such that an image processor reads the written image data per a macro block unit, and sequentially writing the image data input from the camera at the sixteenth line in the horizontal direction;
when the image processor reads all the image data written at the first sector per the macro block unit, keeping the reading of the image data to be in the first mode, and making the storage of the image data input from the camera enter a second mode to thereby write the image data input from the camera at the first sector;
when all the image data written at the sixteenth sector are read in the first mode, shifting the reading of the written image data into the second mode to sequentially read the image data written in the first lines of the sectors per the respective macro blocks, and sequentially writing the image data input from the camera at the sixteenth sector in the second mode;
when the reading of the image data written at the first lines of the sectors and the storage of the image data input from the camera up to the sixteenth line of the sixteenth sector in the second mode are completed, keeping the reading of the image data written per the respective macro blocks at the second lines of the sectors to be in the second mode, and shifting the storage of the image data input from the camera into the first mode to write the data at the first lines in the horizontal direction; and
when the data reading up to the sixteenth line through the data reading of the second mode and the data storage of the first mode is completed, maintaining the data reading of the first mode, and writing the image data input from the camera in the first mode.

2. The method of claim 1 wherein the shifting between the first mode controlling and the second mode controlling is repeated depending upon the image data written at the lines and the sectors, and the read memory regions.

3. The method of claim 1 wherein the vertical lines and the horizontal sectors are divided by the multiple of 16 depending upon the size of the memory.

4. The method of claim 1 wherein the respective horizontal sectors have a minimal size so large as to write the image data of one line in the horizontal direction of the frame.

5. The method of claim 1 wherein the first mode is controlled such that the image data input from the camera are sequentially written at the vertical lines of the memory divided by the multiple of 16 in the horizontal direction, and the image processor reads the written image data per the macro block unit.

6. The method of claim 1 wherein the second mode is controlled such that the image data input from the camera are sequentially written at the respective horizontal sectors of the memory divided by the multiple of 16, and the image processor sequentially reads the written image data from the respective horizontal sectors per the respective macro blocks with respect to the vertical lines.

7. The method of claim 1 wherein when the storage of the image data at the first to the fifteenth lines in the first mode is completed, the image data are written at the sixteenth line in the first mode while conducting the reading of the first mode per the macro block unit so that the normal image data are read at the sixteenth line.

8. The method of claim 1 wherein when the image data input from the camera are written in the first mode, the image processor reads the data per the macro block unit directly before the input of the image data to be written at the sixteenth line after the completion of the storage of the image data at the fifteenth line such that the memory size does not exceed the frame width (the horizontal size of one frame) x 16.

9. The method of claim 1 wherein when the frame width of the memory is fixed in a hardware manner, the amount of data input from the camera is controlled such that when the image with a horizontal size being half the horizontal size of the fixed memory or less is input, the controlling is also made with a double buffer structure.

10. The method of claim 1 wherein the memory is address-controlled with the first and the second modes, and has a size being half the size of a memory with a double buffer structure.

## Patentansprüche

1. Verfahren zur Adresssteuerung eines Speichers mit einer einzigen Pufferstruktur, wobei das Verfahren folgende Schritte beinhaltet:
Unterteilen des Speichers in vertikale Zeilen und horizontale Sektoren, wenn die Bilddatenverarbeitung per Blockeinheit aktiviert ist;
Durchführen eines Adresssteuerns der Bilddaten, die von der Kamera zugeführt werden, und zwar durch Ausführen eines ersten Modus, derart, dass die Daten in horizontaler Richtung sequentiell in den Speicher geschrieben werden, und Schreiben der Bilddaten bei den ersten bis fünfzehnten vertikalen Zeilen;
wenn das Speichern der Bilddaten bei den ersten bis fünfzehnten Zeilen abgeschlossen ist, Durchführen eines Adresssteuerns der geschriebenen Bilddaten, derart, dass ein Bildprozessor die geschriebenen Bilddaten per Makroblockeinheit ausliest, und sequentielles Schreiben der von der Kamera zugeführten Bilddaten bei der sechzehnten Zeile in horizontaler Richtung;
wenn der Bildprozessor alle Bilddaten liest, die in den ersten Sektor per Makroblockeinheit geschrieben werden, Beibehalten des Lesens der Bilddaten im ersten Modus, und Veranlassen, dass das Speichern der von der Kamera zugeführten Bilddaten in einen zweiten Modus eintritt, um dadurch die von der Kamera zugeführten Bilddaten in den ersten Sektor zu schreiben;
wenn alle beim sechzehnten Sektor geschriebenen Bilddaten im ersten Modus gelesen werden, Umschalten des Lesens der geschriebenen Bilddaten in den zweiten Modus, um die Bilddaten, die bei den ersten Zeilen der Sektoren geschrieben sind, per jeweiliger Makroblöcke sequentiell auszulesen, und sequentielles Schreiben der von der Kamera zugeführten Bilddaten beim sechzehnten Sektor im zweiten Modus;
wenn das Lesen der Bilddaten, die bei den ersten Zeilen der Sektoren geschrieben sind, und das Speichern der von der Kamera zugeführten Bilddaten bis zur sechzehnten Zeile des sechzehnten Sektors im zweiten Modus abgeschlossen sind, Beibehalten, dass die Bilddaten, die per jeweiliger Makroblöcke bei den zweiten Zeilen der Sektoren geschrieben sind, im zweiten Modus gelesen werden, und Umschalten des Speicherns der von der Kamera zugeführten Bilddaten in den ersten Modus, um die Daten bei den ersten Zeilen in horizontaler Richtung zu schreiben; und
wenn das Datenlesen bis zur sechzehnten Zeile mittels des Datenlesens des zweiten Modus und des Datenspeicherns des ersten Modus abgeschlossen ist, Beibehalten des Datenlesens des ersten Modus, und Schreiben der von der Kamera zugeführten Bilddaten im ersten Modus.

2. Verfahren nach Anspruch 1, bei dem das Umschalten zwischen der im ersten Modus erfolgenden Steuerung und der im zweiten Modus erfolgenden Steuerung wiederholt wird, und zwar in Abhängigkeit von den bei den Zeilen und Sektoren geschriebenen Bilddaten, und den gelesenen Speicherbereichen.

3. Verfahren nach Anspruch 1, bei dem die vertikalen Zeilen und die horizontalen Sektoren in Abhängigkeit von der Größe des Speichers durch ein Vielfaches von 16 unterteilt sind.

4. Verfahren nach Anspruch 1, bei dem die jeweiligen horizontalen Sektoren eine minimale Größe aufweisen, die groß genug ist, um die Bilddaten einer einzigen Zeile in horizontaler Richtung des Frame zu schreiben.

5. Verfahren nach Anspruch 1, bei dem der erste Modus derart gesteuert wird, dass die von der Kamera zugeführten Bilddaten bei den vertikalen Zeilen des Speichers, der durch das Vielfache von 16 in horizontaler Richtung unterteilt ist, sequentiell geschrieben werden, und der Bildprozessor die geschriebenen Bilddaten per Makroblockeinheit ausliest.

6. Verfahren nach Anspruch 1, bei dem der zweite Modus derart gesteuert wird, dass die von der Kamera zugeführten Bilddaten bei den jeweiligen horizontalen Sektoren des Speichers, der durch das Vielfache von 16 unterteilt ist, sequentiell geschrieben werden, und der Bildprozessor die geschriebenen Bilddaten aus den jeweiligen horizontalen Sektoren per jeweilige Makroblöcke mit Bezug auf die vertikalen Zeilen ausliest.

7. Verfahren nach Anspruch 1, bei dem, wenn das Speichern der Bilddaten bei den ersten bis fünfzehnten Zeilen im ersten Modus abgeschlossen ist, die Bilddaten bei der sechzehnten Zeile im ersten Modus geschrieben werden, während das Lesen des ersten Modus per Makroblockeinheit ausgeführt wird, so dass die normalen Bilddaten bei der sechzehnten Zeile ausgelesen werden.

8. Verfahren nach Anspruch 1, bei dem, wenn die von der Kamera zugeführten Bilddaten im ersten Modus geschrieben werden, der Bildprozessor die Daten per Makroblockeinheit ausliest, und zwar direkt vor dem Zuführen der Bilddaten, die bei der sechzehnten Zeile zu schreiben sind, nach dem Abschluss des Speicherns der Bilddaten bei der fünfzehnten Zeile, derart, dass die Speichergröße die Breite des Frame (die horizontale Größe eines einzigen Frame) x 16 nicht übersteigt.

9. Verfahren nach Anspruch 1, bei dem, wenn die Breite des Frame des Speichers hardwareseitig festgelegt ist, die Menge an von der Kamera zugeführten Daten derart gesteuert wird, dass, wenn ein Bild, dessen horizontale Größe die Hälfte der horizontalen Größe des festgelegten Speichers oder weniger beträgt, zugeführt wird, das Steuern auch mit einer doppelten Pufferstruktur erfolgt.

10. Verfahren nach Anspruch 1, bei dem die Adresssteuerung des Speichers mit den ersten und zweiten Modi erfolgt, wobei die Größe des Speichers die Hälfte der Größe eines Speichers mit doppelter Pufferstruktur beträgt.

## Revendications

1. Procédé de contrôle en adresse de mémoire à structure de tampon unique, ce procédé comprenant les étapes consistant à :
diviser la mémoire en lignes verticales et en secteurs horizontaux quand le traitement des données d'image par unité de bloc est activé ;
contrôler en adresse les données d'image entrées à partir de la caméra en exécutant un premier mode de sorte que les données sont écrites séquentiellement dans la mémoire dans la direction horizontale, et écrire les données d'image aux première à quinzième lignes verticales ;
quand le stockage des données d'image de la première à la quinzième ligne est achevé, contrôler en adresse les données d'image écrites de sorte qu'un processeur d'images lise les données d'image écrites par unité de bloc macro, et écrire séquentiellement les données d'image entrées à partir de la caméra à la seizième ligne dans la direction horizontale ;
quand le processeur d'images lit toutes les données d'image écrites dans le premier secteur par l'unité de bloc macro, maintenir la lecture des données d'image dans le premier mode, et amener le stockage des données d'image entrées à partir de la caméra à entrer dans un deuxième mode pour ainsi écrire les données d'image entrées à partir de la caméra dans le premier secteur ;
quand toutes les données d'image écrites dans le seizième secteur sont lues dans le premier mode, décaler la lecture des données d'image écrites dans le deuxième mode pour lire séquentiellement les données d'image écrites aux premières lignes des secteurs par les blocs macro respectifs, et écrire séquentiellement les données d'image entrées à partir de la caméra dans le seizième secteur dans le deuxième mode ;
quand la lecture des données d'image écrites aux premières lignes des secteurs et le stockage des données d'image entrées à partir de la caméra jusqu'à la seizième ligne du seizième secteur dans le deuxième mode sont achevés, maintenir la lecture des données d'image écrites par les blocs macro respectifs aux deuxièmes lignes des secteurs dans le deuxième mode, et décaler le stockage des données d'image entrées à partir de la caméra dans le premier mode pour écrire les données aux premières lignes dans la direction horizontale ; et
quand la lecture des données jusqu'à la seizième ligne à travers la lecture de données du deuxième mode et le stockage de données du premier mode est achevée, maintenir la lecture de données du premier mode, et écrire les données d'image entrées à partir de la caméra dans le premier mode.

2. Procédé selon la revendication 1 dans lequel le décalage entre le contrôle de premier mode et le contrôle de deuxième mode est répété en fonction des données d'image écrites aux lignes et aux secteurs, et des régions de mémoire lues.

3. Procédé selon la revendication 1 dans lequel les lignes verticales et les secteurs horizontaux sont divisés par le multiple de 16 selon la taille de la mémoire.

4. Procédé selon la revendication 1 dans lequel les secteurs horizontaux respectifs ont une taille minimale suffisamment grande pour écrire les données d'image d'une ligne dans la direction horizontale de la trame.

5. Procédé selon la revendication 1 dans lequel le premier mode est contrôlé de sorte que les données d'image entrées à partir de la caméra soient écrites séquentiellement aux lignes verticales de la mémoire divisée par le multiple de 16 dans la direction horizontale, et que le processeur d'images lise les données d'image écrites par l'unité de bloc macro.

6. Procédé selon la revendication 1 dans lequel le deuxième mode est contrôlé de sorte que les données d'image entrées à partir de la caméra soient écrites séquentiellement dans les secteurs horizontaux respectifs de la mémoire divisée par le multiple de 16, et le processeur d'images lit séquentiellement les données d'image écrites à partir des secteurs horizontaux respectifs par les blocs macros respectifs par rapport aux lignes verticales.

7. Procédé selon la revendication 1 dans lequel quand le stockage des données d'image aux première à quinzième lignes dans le premier mode est achevé, les données d'image sont écrites à la seizième ligne dans le premier mode tout en menant la lecture du premier mode par l'unité de bloc macro de sorte que les données d'image normales soient lues à la seizième ligne.

8. Procédé selon la revendication 1 dans lequel quand les données d'image entrées à partir de la caméra sont écrites dans le premier mode, le processeur d'images lit les données par l'unité de bloc macro directement avant l'entrée des données d'image à écrire à la seizième ligne après l'achèvement du stockage des données d'image à la quinzième ligne de sorte que la taille de la mémoire n'excède pas la largeur de trame (la taille horizontale d'une trame) x 16.

9. Procédé selon la revendication 1 dans lequel quand la largeur de trame de la mémoire est fixée d'une manière matérielle, la quantité de données entrées à partir de la caméra est contrôlée de sorte que quand l'image avec une taille horizontale qui est la moitié de la taille horizontale de la mémoire fixée ou moins est entrée, le contrôle soit aussi effectué avec une structure à double tampon.

10. Procédé selon la revendication 1 dans lequel la mémoire est contrôlée en adresse avec le premier et le deuxième mode, et a une taille qui est la moitié de la taille d'une mémoire avec une structure à double tampon.
